# EUROPÄISCHE PATENTANMELDUNG

(11) **EP 3 421 386 A1**
(43) Veröffentlichungstag der Anmeldung: **02.01.2019**
(21) Anmeldenummer: 18170534.4
(22) Anmeldetag: 03.05.2018
(51) Int. Cl.: B65D 65/12, B65D 65/14, A01F 15/07

(54) **HÜLLMATERIAL FÜR EINE BALLENPRESSE UND VERFAHREN**

(30) Priorität: 27.06.2017 DE 102017210847
(71) Anmelder: Deere & Company, Moline, IL 61265 (US)
(72) Erfinder: Gresset, Pascal, 68163 Mannheim (DE); Perrotin, Frederic, 68163 Mannheim (DE)
(74) Vertreter: Reichert, Christian

(57) **Zusammenfassung**

Es wird ein Hüllmaterial (42) für eine Ballenpresse (10), insbesondere eine landwirtschaftliche Ballenpresse zur Bildung rundzylindrischer Ballen (12), zur Umhüllung von wenigstens im Wesentlichen der Mantelfläche (43) eines Ballens (12), wobei das Hüllmaterial (42) der Ballenpresse (10) in der Art einer Vorratsrolle (40) zugeführt wird, auf die das Hüllmaterial (42) aufgewickelt ist, vorgeschlagen, wobei das Hüllmaterial (42) bezogen auf seine Längserstreckung in vorzugsweise im Wesentlichen selbsttätig trennbare Abschnitte (48) unterteilt ist.

Darüber hinaus wird ein Verfahren zur Umhüllung eines Ballen (12), vorzugsweise eines in einer Ballenpresse (10) gebildeten Rundballens, mit einem derartigen Hüllmaterial (42) vorgeschlagen, wobei der Ballen (12) nach Abschluss der Ballenbildung mit einem Abschnitt (48) des Hüllmaterials (42) umhüllt wird, der sich nach erfolgter Umhüllung des Ballens (12) selbsttätig, insbesondere entlang eines Sollrissbereichs (50), von dem übrigen auf einer Vorratsrolle (50) aufgewickelten Hüllmaterial (42) abtrennt und im Anschluss insbesondere ein Endbereich (71) des Abschnitts (48) an bereits auf dem Ballen (12) befindlichen Hüllmaterial (42) anhaftet.

## Beschreibung

Die vorliegende Erfindung betrifft ein Hüllmaterial für eine Ballenpresse, insbesondere eine landwirtschaftliche Ballenpresse zur Bildung rundzylindrischer Ballen, zur Umhüllung von vorzugsweise wenigstens im Wesentlichen der Mantelfläche eines Ballens, wobei das Hüllmaterial der Ballenpresse vorzugsweise in der Art einer Vorratsrolle zugeführt wird, auf die das Hüllmaterial aufgewickelt ist und ein Verfahren zur Umhüllung eines Ballens, vorzugsweise eines in einer Ballenpresse gebildeten Rundballens, mit einem Hüllmaterial.

Bekannte Umhüllungseinrichtungen werden an Rundballenpressen eingesetzt, um einen in einem Pressraum der Rundballenpresse gebildeten Rundballen mit einem Hüllmaterial, beispielsweise einem Netz, einer Folie oder einem ähnlichen, gegebenenfalls auch semipermeablen, atmungsaktiven und/oder wasserabweisenden Material zu umhüllen, bevor dieser nach Abschluss der Umhüllung von der Rundballenpresse abgegeben und danach auf dem Untergrund abgelegt oder an eine weitere Einrichtung, beispielsweise eine Wickeleinrichtung, übergeben wird.

Derartige Rundballenpressen werden sowohl im landwirtschaftlichen als auch im industriellen Bereich eingesetzt. Entsprechende landwirtschaftliche Pressen dienen beispielsweise zur Bildung von Erntegutballen, beispielsweise in der Art von Rundballen, und erzeugen häufig zumindest im Wesentlichen rundzylindrische Ballen aus Erntegut, beispielsweise in der Art von Stroh, Heu, Häckselgut etc.. Industrielle Pressen finden Verwendung bei der Verdichtung von Müll, Textilien oder anderen Stoffen bzw. bei deren Pressung zu Ballen.

Bekanntes Hüllmaterial erfordert ein mehrmaliges Umwickeln eines Ballens mit dem Hüllmaterial, um eine vollständige Umhüllung und/oder ein sicheres Halten des Hüllmaterials an dem Ballen sicherzustellen.

Die der Erfindung zugrunde liegende Aufgabe wird darin gesehen, ein Hüllmaterial und ein Verfahren anzugeben, durch welche die vorgenannten Nachteile überwunden werden.

Die Aufgabe wird erfindungsgemäß durch die Lehre der Patentansprüche 1 bzw. 9 gelöst. Weitere vorteilhafte Ausgestaltungen und Weiterbildungen der Erfindung gehen aus den Unteransprüchen hervor.

Ist ein Hüllmaterial zur Umhüllung von vorzugsweise wenigstens im Wesentlichen der Mantelfläche eines Ballens bezogen auf seine Längserstreckung in vorzugsweise im Wesentlichen selbsttätig trennbare Abschnitte unterteilt, so muss das Hüllmaterial nach Abschluss eines Umhüllungsvorgangs nicht mehr durch eine Trenneinrichtung getrennt und/oder durch eine Messeranordnung abgeschnitten werden. Die Abschnitte können auch eine vorbestimmte bzw. definierte Länge aufweisen, so dass die Menge an Hüllmaterial, die für einen Umhüllungsvorgang verwendet wird, genau vorgegeben werden kann. Ein derartiges Hüllmaterial wird der Ballenpresse vorzugsweise in der Art einer Vorratsrolle zugeführt, auf die das Hüllmaterial aufgewickelt ist. Bei der Ballenpresse handelt es sich insbesondere um eine landwirtschaftliche Ballenpresse zur Bildung rundzylindrischer Ballen. Die Ballenpresse kann aber auch im industriellen Bereich, beispielsweise zur Bildung von Ballen aus Papier, Müll, Stoff oder anderen Materialien eingesetzt werden. Es ist darüber hinaus denkbar, dass es sich um eine Presse zur Herstellung von Quaderballen handelt, wie sie sowohl im landwirtschaftlichen als auch im industriellen Bereich Verwendung findet.

Besonders günstig ist es, wenn zwischen den Abschnitten wenigstens ein Sollrissbereich vorgesehen ist. Ein derartiger Sollrissbereich ist vorzugsweise in einfacher Art und Weise als wenigstens eine Perforationslinie ausgebildet. Eine derartige Perforationslinie kann einfach und sicher insbesondere vor einem Aufwickeln des Hüllmaterials auf die Vorratsrolle oder aber bereits während bzw. bei der Herstellung des Hüllmaterials in dieses eingebracht werden. Erstreckt sich der Sollrissbereich bzw. die Perforationslinie zumindest im Wesentlichen über die Breite des Hüllmaterials, so begünstigt dies eine vollständige Trennung der Abschnitte zwischen denen der Sollrissbereich bzw. die Perforationslinie angeordnet ist.

Übersteigt die Länge der Abschnitte den Umfang des zu umhüllenden Ballen, so garantiert dies eine vollständige Umhüllung des Ballens. Die Länge kann den Umfang um ein Vielfaches übersteigen. Besonders sparsam und trotzdem sicher und dauerhaft in der Umhüllung ist es, wenn die Länge der Abschnitte vorzugsweise etwa das 1,5 fache des Umfangs beträgt. Es kann aber auch eine kürzere Länge vorgesehen sein, üblicherweise sollte diese über das Einfache zumindest geringfügig übersteigen.

Weisen die Abschnitte in einem bezogen auf eine Förderrichtung nacheilenden Endbereich jedes Abschnitts wenigstens einen Haftbereich auf, so kann dieser mit dem bereits um den Ballen gewickelten bzw. diesen umhüllenden Hüllmaterial zusammenzuwirken, um das Hüllmaterial und/oder einen Endbereich des Hüllmaterials zu sichern. Vorzugsweise eilt der Haftbereich einem entsprechenden nächsten Sollrissbereich vor, so dass sichergestellt wird, dass der Haftbereich in einem Endbereich eines Abschnitts angeordnet ist.

Insbesondere ist in dem Endbereich ein mehrere, insbesondere drei Faltkanten aufweisender Faltbereich vorgesehen, der in einem auf die Vorratsrolle aufgewickelten Zustand des Hüllmaterials vorzugsweise zusammengefaltet ist und sich bei einem Abwickeln von der Vorratsrolle entfalten kann. Der wenigstens eine Haftbereich und/oder der Sollrissbereich sind vorzugsweise zumindest wenn das Hüllmaterial auf der Vorratsrolle aufgewickelt ist, zwischen in gefaltetem Zustand vorzugsweise innenliegenden Seitenbereichen des Faltbereichs angeordnet. Auf diese Weise liegen der Sollrissbereich und/oder Haftbereich im insbesondere auf die Vorratsrolle aufgewickelten Zustand geschützt zwischen Seitenbereichen und werden vor Beeinflussungen durch Umgebungseinflüsse geschützt. Insbesondere aber wird der Haftbereich vorzugsweise im aufgewickelten Zustand des Hüllmaterials daran gehindert, ungewollt mit anderen Bereichen des Hüllmaterials und/oder der Ballenpresse bzw. der Umhüllungseinrichtung zu interagieren, insbesondere an solchen anzuhaften, und/oder von seiner Haftfähigkeit einzubüßen.

Es ist denkbar, dass der Haftbereich nur eine Haftkomponente aufweist, die direkt mit dem Hüllmaterial zusammen wirken kann, insbesondere um einen Endbereich eines auf um einen Ballen gewickelten bzw. einen solchen umhüllenden Abschnitts auf dem übrigen Hüllmaterial zu sichern bzw. einem Abwickeln des Hüllmaterials von dem Ballen entgegenzuwirken. Besonders günstig ist es aber, wenn der Haftbereich wenigstens zwei Haftkomponenten aufweist, die vorzugsweise jeweils mittels einer weiteren Haftkomponenten auf dem Hüllmaterial gehalten werden, wobei die zweite Haftkomponente insbesondere geeignet ist, mit der ersten Komponente eine lösbare und mit dem Hüllmaterial eine zumindest im Wesentlichen feste Haftverbindung einzugehen. Die Haftkomponenten können jegliche geeignete Form einnehmen, vorzugsweise sind sie aber zumindest im Wesentlichen streifenförmige vorgesehen. Die Streifen können dabei durchgängig oder unterbrochen vorgesehen sein. Insbesondere erstreckt sich der Haftbereich bzw. die Haftkomponenten nicht bis in einen Randbereich, um gegebenenfalls ein Zusammenwirken und/oder Anhaften an anderen Arbeitsmitteln und/oder Bauteilen der Ballenpresse entgegenzuwirken.

Insbesondere wirken die erste und zweite Haftkomponente derart zusammen, dass sie zwei Seitenbereiche des Faltbereichs geschlossen halten. Dies ist besonders dann günstig, wenn das Hüllmaterial auf der Vorratsrolle aufgewickelt ist, so dass die Haftkomponenten einem ungewollten und/oder vorzeitigen Entfalten des Hüllmaterial vorbeugen.

Ist der Sollrissbereich wenigstens in einem gefalteten Zustand des Hüllmaterials innerhalb der Seitenbereiche des Faltbereichs angeordnet, so kann dies einem vorzeitigen Trennen der Abschnitte vorbeugen und/oder den Sollrissbereich vor äußeren Einflüssen, beispielsweise durch ein den Ballen bildendes Material entgegenwirken. Sind die erste und zweite Haftkomponente auf bezogen auf eine Längserstreckung des Hüllmaterials unterschiedlichen Seiten des Sollrissbereichs angeordnet, so kann die erste Haftkomponente nach einem Trennen des voreilenden Abschnitts von dem übrigen Hüllmaterial auf dem voreilenden Abschnitt verbleiben, vorzugsweise um den Endbereich des voreilenden Abschnitts mit dem bereits den Ballen umwickelnden bzw. diesen umhüllenden Hüllmaterial haftend zu verbinden bzw. den Endbereich auf diesem gegen ein unbeabsichtigtes Ablösen zu sichern. Die zweite Haftkomponente kann dann auf einem Anfangsbereich des nacheilenden Abschnitts angeordnet sein. Die zweite Haftkomponente muss dabei nicht notwendigerweise eine Funktion aufweisen, sie kann aber beispielsweise unterstützend dazu beitragen, den Anfangsbereich bzw. den nacheilenden Abschnitt mit dem Ballen in Kontakt zu bringen und/oder ihn insbesondere zu Beginn eines Umhüllungsvorgangs an diesem zu halten.

In einem Verfahren zur Umhüllung eines Ballen, vorzugsweise eines in einer Ballenpresse gebildeten Rundballens, mit einem derartigen Hüllmaterial, bei dem der Ballen nach Abschluss der Ballenbildung mit vorzugsweise einem Abschnitt des Hüllmaterials umhüllt wird, kann vorgesehen sind, dass der Abschnitt sich nach erfolgter Umhüllung des Ballens selbsttätig, insbesondere entlang eines Sollrissbereichs, von dem übrigen auf der Vorratsrolle aufgewickelten Hüllmaterial abtrennt und im Anschluss insbesondere ein Endbereich des Abschnitts an bereits auf dem Ballen befindlichen Hüllmaterial anhaftet.

Dabei entfaltet sich ein Faltbereich des Hüllmaterials nach einem vorzugsweise zumindest annähernd vollständigen Umwickeln des Ballen mit dem Abschnitt insbesondere selbsttätig, wobei der Faltbereich vorzugsweise einen Haftbereich freigibt. Es ist besonders günstig, wenn sich dabei eine erste von einer zweiten Haftkomponente löst und insbesondere die zweite Haftkomponente nach einem Abtrennen des Abschnitts von dem übrigen Hüllmaterial mit den Ballen umhüllenden Hüllmaterial eine zumindest im Wesentlichen feste Haftverbindung eingeht.

Anhand der Zeichnung, die ein Ausführungsbeispiel der Erfindung zeigt, werden nachfolgend die Erfindung sowie weitere Vorteile und vorteilhafte Weiterbildungen der Erfindung und Ausgestaltungen der Erfindung näher beschrieben und erläutert.

Es zeigt:
- Fig. 1: eine schematische Seitenansicht einer landwirtschaftlichen Ballenpresse mit Pressmitteln und einer Umhüllungseinrichtung,
- Fig. 2: eine vergrößerte Darstellung der Umhüllungseinrichtung mit einem auf einer Vorratsrolle aufgewickelten Hüllmaterial während der Umhüllung eines Ballens mit Hüllmaterial,
- Fig. 3: eine Darstellung gemäß Figur 2 gegen Ende des Umhüllungsvorgangs, wobei der Ballen bereits vollständig mit Hüllmaterial umwickelt ist,
- Fig. 4: eine Darstellung gemäß den Figuren 2 und 3, wobei sich ein Faltbereich des Hüllmaterials beginnt, sich zu entfalten,
- Fig. 5: eine Darstellung gemäß Figur 4 bei fast vollständig entfaltetem Faltbereich und
- Fig. 6: ein Darstellung eines in einem Zufuhrspalt angeordneten Anfangsbereich des Hüllmaterials.

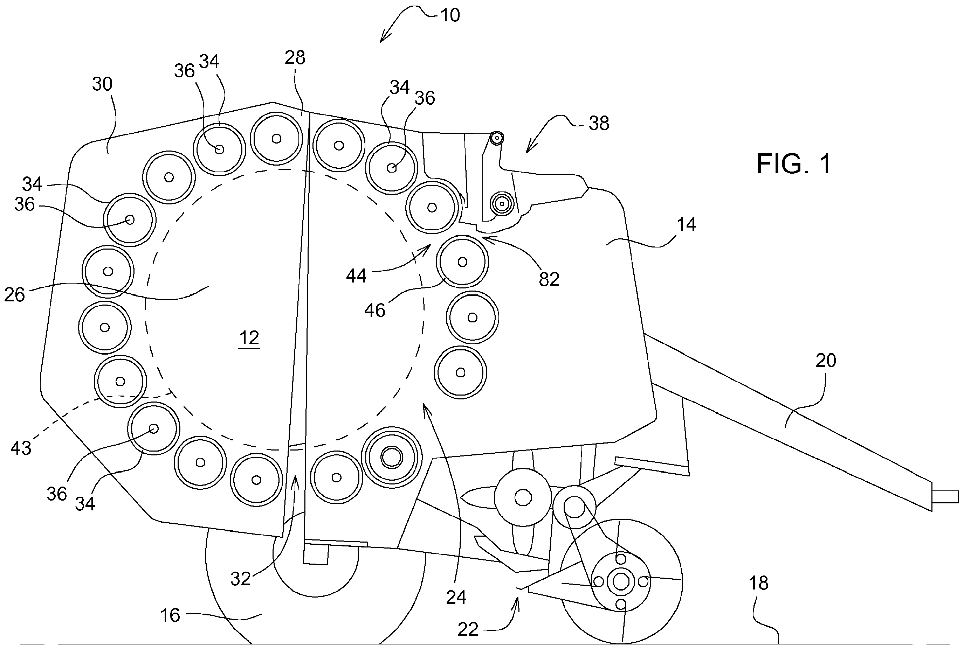

In der Figur 1 der Zeichnung wird eine schematisch dargestellte Ballenpresse 10, in der Art einer landwirtschaftlichen Ballenpresse zum Pressen eines rundzylindrischen Ballens 12 gezeigt, welche einen ersten Gehäuseteil 14 aufweist, der sich mittels Rädern 16 auf einem Untergrund 18 abstützt und die mittels einer Deichsel 20 an ein nicht gezeigtes Zugfahrzeug, z. B. einen Ackerschlepper, anschließbar ist.

An einer bezogen auf eine Vorwärtsfahrtrichtung vorderen, unteren Seite des ersten Gehäuseteils 14 befindet sich in bekannter Weise eine Aufnahmevorrichtung 22 zur Aufnahme und Zufuhr von Erntegut, die geschnittenes Erntegut durch einen Zufuhrkanal 24 in einen Pressraum 26 fördert, wobei der erste Gehäuseteil 14 einen vorderen Teil des Pressraum 26 umgibt. An dem rückwärtigen oberen Eckbereich des ersten Gehäuseteils 14 befindet sich ein Lager 28 für einen schwenkbaren zweiten Gehäuseteil 30, der einen hinteren Teil des Pressraums 26 umgibt. Der zweite Gehäuseteil 30 gibt im geöffneten Zustand eine Öffnung 32 frei, durch welche ein von der Ballenpresse 10 gepresster Ballen 12 abgesetzt bzw. entladen oder ausgeworfen werden kann. Der schwenkbare zweite Gehäuseteil 30 kann mittels Stellmotoren (nicht gezeigt) betätigt werden (geöffnet und geschlossen werden) und stellt somit eine Auslassklappe für einen in dem Pressraum 26 gepressten Ballen 12 dar.

Gemäß dem vorliegenden Ausführungsbeispiel ist der Pressraum 26 der Ballenpresse 10 größenunveränderlich ausgebildet und die Ballenpresse 10 weist eine Vielzahl zueinander parallel verlaufender Pressrollen 34 (exemplarisch wurden hier nur einige wenige Pressrollen 34 mit dem Bezugszeichen 34 versehen), deren Rollachsen 36 bei geschlossenem zweiten Gehäuseteil 24 auf einem Kreisbogen gelegen sind, und von denen wenigstens einige angetrieben sind. Die Pressrollen 34 dienen, neben einem Pressen und einer Formgebung, insbesondere auch einer Rotationserzeugung oder einer Rotationserhaltung des in dem Pressraum 20 angeordneten Rundballens 12. Die Ballenpresse 10 ist hier exemplarisch zur Darstellung der Öffnung 32 mit leicht geöffnetem hinterem Gehäuseteil 30 abgebildet. Während eines Pressvorgangs ist dieser jedoch geschlossen.

Ferner umfasst die Ballenpresse 10 eine Umhüllungseinrichtung 38, die mit einer Vorratsrolle 40 für Hüllmaterial 42 bestückt ist, die das Hüllmaterial 42 dem Pressraum 26 durch einen Zufuhrspalt 44 zuführt. Unmittelbar unterhalb des Zufuhrspalts 44 bzw. an diesen angrenzend ist eine Zufuhrrolle 46 vorgesehen, die abgesehen von ihrer Position, den übrigen Pressrollen 34 gleicht und mit diesen über einen nicht gezeigten Antrieb rotatorisch angetrieben werden kann.

Nachdem der eigentliche Ballenpressvorgang, also die Erntegutaufnahme und Bildung eines Ballens 12 durch die Pressrollen 34 abgeschlossen ist, wird eine Fahrt über den Untergrund 18 unterbrochen, da die Ballenpresse 10 mit dem Ballen 12 gefüllt ist und kein weiteres Erntegut mehr in den Pressraum 26 aufgenommen werden soll bzw. kann. Zu dieser Zeit wird auch die Umhüllungseinrichtung 38 aktiviert, ein sich dem Ballenpressvorgang anschließender Umhüllungsvorgang eingeleitet und das Hüllmaterial 42 von der Vorratsrolle 40 durch den Zufuhrspalt 44 in den Pressraum 26 und an den Ballen 12 herangeführt. Durch eine anhaltende Drehung des sich in dem Pressraum 26 befindlichen Ballens 12 wird das Hüllmaterial 42 derart um den Ballen 12 gewickelt, dass es eine Mantelfläche 43 des Ballens 12 umhüllt. Nachdem der Umhüllungsvorgang abgeschlossen ist, wird der Ballen 12 mittels Öffnen des in der Art einer Auslassklappe wirkenden zweiten Gehäuseteils 30 durch die Öffnung 32 über eine Entladerampe (nicht gezeigt) auf dem Untergrund 18 abgelegt. Sodann wird die Fahrt mit der Ballenpresse 10 wieder aufgenommen und ein neuer Ballenpressvorgang beginnt.

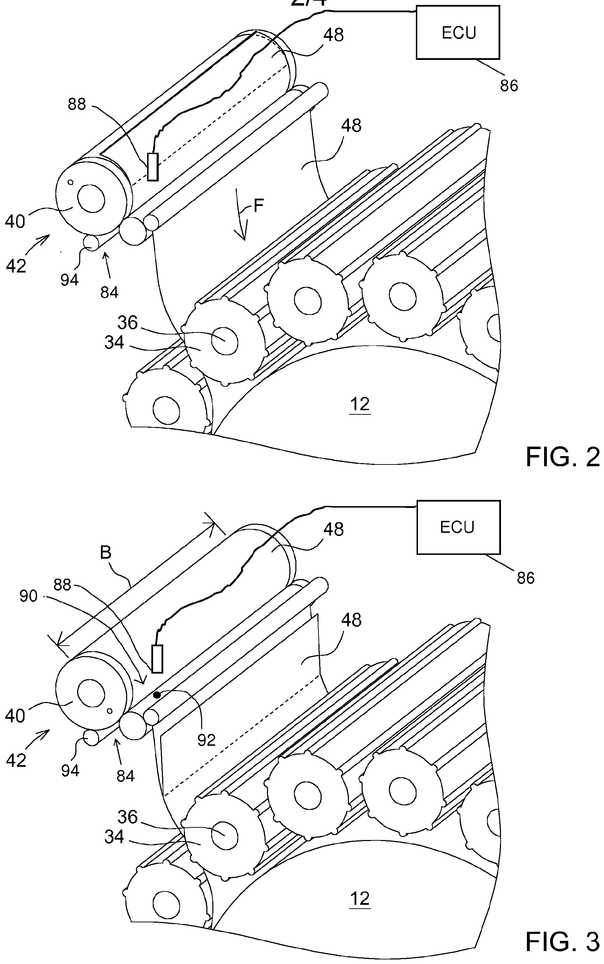

Es wird nun auch auf die Figur 2 bis 5 der Zeichnung Bezug genommen, in der die Umhüllungseinrichtung 38 und das Hüllmaterial 42 in einer vergrößerten Darstellung gezeigt werden. Die Umhüllungseinrichtung 38 ist gemäß dem vorliegenden Ausführungsbeispiel grundsätzlich in bekannter Art und Weise ausgebildet. Das Hüllmaterial 42 wird dem Zufuhrspalt 44 dabei derart zugeführt, dass es durch die angetriebene Zufuhrrolle 46 ergriffen und in Richtung des Ballen 12 gefördert wird. Gemäß dem vorliegenden Ausführungsbeispiel wird das Hüllmaterial 42 zumindest im Wesentlichen von oben an die Zufuhrrolle 46 herangeführt, wodurch es in einfacher Weise von dieser ergriffen und mitgenommen werden kann (siehe Figur 2).

Die Figuren 3 bis 5 zeigen die Umhüllungseinrichtung 38 und das Hüllmaterial 42 nun in aufeinanderfolgenden Phasen eines Umhüllungsvorgang. Gemäß Figur 3 ist der Ballen 12 nun fast vollständig mit Hüllmaterial 42 umhüllt und der Umhüllungsvorgang steht kurz vor dem Abschluss. Mit Blick auf die Vorratsrolle 40 wird deutlich, dass das Hüllmaterial 42 in Längsrichtung derart in Abschnitte 48 unterteilt ist, dass jeweils ein Abschnitt 48 für die Umhüllung eines Ballens 12 genutzt wird, wobei zwischen den Abschnitten 48 Sollrissbereiche 50 vorgesehen sind. Diese Sollrissbereiche 50 sind gemäß dem vorliegenden Ausführungsbeispiel in der Art von sich über die Breite B des Hüllmaterials 42 erstreckende Perforationslinien 52 ausgeführt.

Darüber hinaus weist das Hüllmaterial 42 Faltbereiche 54 und Haftbereiche 56 auf, wobei die Haftbereiche 56 jeweils zwei in der Art von Haft- bzw. Klebestreifen ausgebildete Haftkomponenten 58, 60 aufweisen. Diese Haftkomponenten 58, 60 sind wiederum mittels weiterer, nur andeutungsweise gezeigter Haftkomponenten 62, 64 an dem Hüllmaterial 42 angebracht.

Die Faltbereiche 54 weisen jeweils eine erste, eine zweite und eine dritte Faltkante 66, 68, 70 auf, welche bezogen auf die Förderrichtung F einander nacheilend vorgesehen sind. Die erste Faltkante 66 ist in einem Endbereich 71 eines voreilenden Abschnitts 48, die zweiten Faltkanten 68, 70 sind in einem nacheilenden Abschnitt 48 vorgesehen, wobei der Haftbereich 56 und der Sollrissbereich 50 zwischen der ersten Faltkante 66 und der zweiten Faltkante 68 vorgesehen sind und der Haftbereich 56 dem Sollrissbereich 50 voreilt. Die erste Faltkante 66 und die zweite Faltkante 68 bestimmen darüber hinaus zwischen sich einen ersten Seitenbereich 72 und die zweite Faltkante 68 und die dritte Faltkante 70 einen zweiten Seitenbereich 74.

Ist das Hüllmaterial 42 auf der Vorratsrolle 40 aufgewickelt, so sind die Faltbereiche 52 derart zusammengefaltet, dass der Sollrissbereich 54 sowie der Haftbereich 56 zwischen den Seitenbereiche 72, 74 angeordnet sind, nämlich derart, dass die Haftkomponenten 58, 60 aufeinander zu liegen kommen. Vorzugsweise ist die zweite Haftkomponente 60 als ein silikonartiges Material ausbildet, das an der ersten Haftkomponente 58 in gefaltetem Zustand des Faltbereichs 54 nur derart leicht anhaftet, dass der Faltbereich 54 in einem auf der Vorratsrolle 40 aufgewickelten Zustand von der ersten und zweiten Haftkomponente 58, 60 zusammengehalten wird.

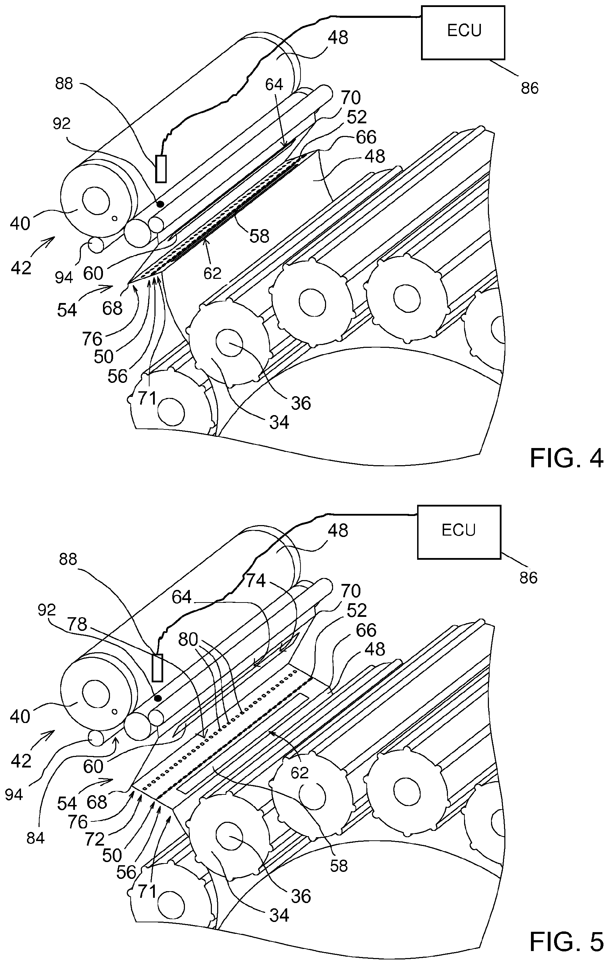

Ist der Ballen 12 vollständig mit Hüllmaterial 42 umwickelt, wie dies in den Figuren 4 und 5 dargestellt ist, so wirkt der rotierende Ballen 12 derart auf das Hüllmaterial 42, dass er auf dieses eine in Förderrichtung F wirkende Kraft auswirkt, welche eine Haftkraft zwischen der ersten und der zweiten Haftkomponente 58, 60 übersteigt und den Faltbereich 54 entfaltet. Die erste Haftkomponente 58 gelangt nun in Anlage mit dem den Ballen 12 umhüllenden Hüllmaterial 42 und geht mit diesem eine fest haftende Verbindung ein.

Die von dem rotierenden Ballen 12 aufgebrachte Kraft wirkt nun auf den Sollrissbereich 50 und trennt die Abschnitte 48 entlang der Perforationslinie 52 voneinander. Der Ballen 12 ist nun mit Hüllmaterial 42 umhüllt und kann aus dem Pressraum 26 abgegeben werden.

Das Hüllmaterial 42 weist darüber hinaus in einem Anfangsbereich 76 eines jeden nacheilenden Abschnitts eine Reihe von Mitnehmern 78 in der Art von im Wesentlichen runden Ausnehmungen 80 auf. Die Mitnehmer 78 erstrecken sich quer über die Breite B des Hüllmaterials 42 und grenzen beabstandet an den bezogen auf die Förderrichtung F voreilenden Sollrissbereich 50 an und sind vor der zweiten Faltkante 68 bzw. zwischen dem voreilenden Sollrissbereich 50 und der zweiten Faltkante 68 vorgesehen.

Durch die Mitnehmer 78 kann das Hüllmaterial 42 bzw. ein Anfangsbereich 72 eines jeden Abschnitts beispielsweise durch den Ballen 12 bzw. durch den Ballen 12 bildendes Material, wie im Falle eines landwirtschaftlichen Ballens beispielsweise durch Halme von Erntegut in der Art von Stroh oder Heu ergriffen werden.

Darüber hinaus kann die Reihe von Ausnehmungen 80 auch in der Art einer Sicherheitseinrichtung für den Fall dienen, dass keine Trennung entlang des Sollrissbereichs 50 erfolgt und/oder der den Ballen 12 umhüllende Abschnitt 48 zu kurz sein sollte. Alternativ kann nun eine Trennung entlang der in Reihe angeordneten Ausnehmungen 80 erfolgen und so einem Umwickeln des Ballens 12 mit einem zweiten Abschnitt 48 vorgebeugt werden.

Weist die Umhüllungseinrichtung 38 eine Zufuhreinrichtung 82 (in Figur 1 andeutungsweise gezeigt) für das Hüllmaterial 42, beispielsweise einen an der Umhüllungseinrichtung 38 schwenkbar vorgesehenen Zufuhrhebel auf, so kann der Zufuhrhebel mit dem Mitnehmer 78 zusammenwirken bzw. insbesondere in eine der oder die Ausnehmung(en) 80 eingreifen, um das Hüllmaterial 42 an die Zufuhrrolle 46 und/oder den Ballen 12 heranzuführen. Ein Zusammenwirken einer derartigen Zufuhreinrichtung 82 mit dem Mitnehmer 78 und insbesondere ein Eingreifen in eine der oder die Ausnehmung(en) 80 kann darüber hinaus die Position des Hüllmaterials 42 und/oder des von dem Zufuhrhebel ergriffenen Abschnitts 48 des Hüllmaterials 42 bezogen auf die Zufuhreinrichtung 82 und damit die Umhüllungseinrichtung 38 bzw. den Ballen 12 bestimmen. Hierdurch kann dazu beigetragen werden, dass das Hüllmaterial 42 und/oder insbesondere der Abschnitt 48 zur Umhüllung des Ballens 12, derart positioniert ist, dass die auf die Zufuhreinrichtung folgende Länge des Abschnitts 48 für jeden Umhüllungsvorgang zumindest im Wesentlichen gleich ist.

Es sei hier angemerkt, dass derartige Mitnehmer 78 auch an konventionellen bzw. bekannten oder an von dem zuvor beschriebenen Hüllmaterial abweichend ausgebildeten Hüllmaterialien, insbesondere an Folien, vorgesehen sein können, bzw. ein zuvor beschriebenes Hüllmaterial 42 nicht notwendigerweise mit derartigen Mitnehmern 78 versehen werden muss.

Es wird nun insbesondere auf die Figuren 2 bis 6 Bezug genommen, in denen eine Bremseinrichtung 84 für ein Hüllmaterial 42 gezeigt wird. Die im folgenden nun genauer beschriebene Bremseinrichtung 84 kann an einer zuvor beschriebenen Umhüllungseinrichtung aber auch an einer konventionellen Umhüllungseinrichtung bzw. Ballenpresse und/oder in Verbindung mit einem zuvor beschriebenen wie auch einem konventionellen Hüllmaterial, beispielsweise einem Netz oder einer Folie, eingesetzt werden.

Gemäß dem vorliegenden Ausführungsbeispiel ist die Bremseinrichtung 84 wirksam mit einer Steuer- oder Regeleinrichtung 86 der Ballenpresse 10 verbunden und weist einen Sensor 88, in der Art eines optischen Sensors 88, auf, der aufnehmen kann, ob sich eine in einem Randbereich 90 des Hüllmaterials 42 vorgesehene Markierung 92 in einem Erfassungsbereich des Sensors 88 befindet.

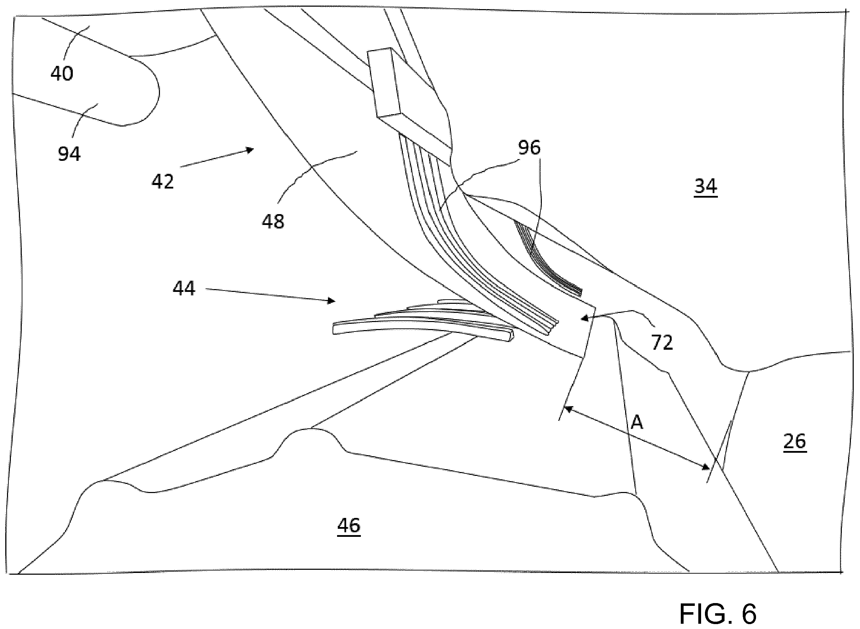

Erkennt der Sensor 88, dass eine Markierung 92 in seinem Erfassungsbereich vorhanden ist, überträgt er diese Information an die Steuer- oder Regeleinrichtung 86, die entsprechend die Bremseinrichtung 84 in der Art aktiviert, dass ein Bremsmittel 94 der Bremseinrichtung 84 an das Hüllmaterial 42 angelegt wird, um dieses abzubremsen. Die Markierung 92 ist auf dem Hüllmaterial 42 derart angeordnet, dass sie der Bremseinrichtung 84 anzeigt, das Hüllmaterial 42 abzubremsen, wenn der Anfangsbereich 72 eines dem einen Ballen 10 umhüllenden Abschnitt 48 nacheilenden Abschnitts 48 bzw. sein nach einem Abtrennen des den Ballen 10 umhüllenden Abschnitts 48 entlang des Sollrissbereichs 50 nun freien Endes eine vorbestimmte Position einnimmt (siehe Figur 6). Insbesondere wird der Abschnitt 48 derart abgebremst, dass sein Anfangsbereich 72 bzw. sein freies Ende derart in dem Zufuhrspalt 44 angeordnet ist, dass ein Abstand A zwischen dem Anfangsbereich 72 und dem Pressraum 26 zu Beginn eines jeden Umhüllungsvorgangs zumindest im Wesentlichen gleich ist. Gemäß der Darstellung in Figur 6 wird das Hüllmaterial 42 bzw. der Anfangsbereich 72 darüber hinaus durch ein für die gewünschte Wirkung der Bremseinrichtung nicht notwendiges Leitmittel 96 in Anlage mit der Zufuhrrolle 44 gehalten.

Auf diese Weise trägt die Bremseinrichtung 84 dazu bei, dass jeder Ballen 10 mit einer zumindest im Wesentlichen gleichen Menge an Hüllmaterial 42 bzw. bei einem zuvor beschriebenen, in Abschnitte 48 unterteilten Hüllmaterial 42 bzw. einem Hüllmaterial 42 mit Sollrissbereichen 50 mit genau einem Abschnitt 48 umhüllt wird bzw. der jeweilige Abschnitt 48 zur Umhüllung eines Ballens passend positioniert wird.

Eine Bremseinrichtung 84 kann alternativ beispielsweise auch zeitlich getaktet gesteuert werden. Es ist aber auch denkbar, dass Sensormittel 88 vorgesehen sind, die beispielsweise die Länge des bereits von der Vorratsrolle 40 abgezogenen Hüllmaterials 42 ermitteln. Die Bremseineinrichtung 84 kann aber auch eine nicht gezeigte Hebeleinrichtung aufweisen, die mit eine Markierung 92 in der Art einer Aussparung zusammenwirkt, in die ein mechanisches Bremselement in der Art eines gelenkig an der Umhüllungseinrichtung 38 vorgesehenen Hebelelements eingreifen kann, um das Hüllmaterial 42 abzubremsen. Nach erfolgter Trennung des Hüllmaterials 42 kann ein derartiges Bremselement beispielsweise zurück in eine Ausgangsstellung verschwenken bzw. verschwenkt werden, in der es nicht auf das Hüllmaterial 42 einwirkt. Eine derartige Bremseinrichtung 84 muss nicht notwendigerweise durch eine Steuer- oder Regeleinrichtung gesteuert bzw. geregelt werden. Es kann aber auch vorgesehen sein, dass ein nicht gezeigter Antrieb, beispielsweise ein Antrieb der Vorratsrolle 40, entsprechend abgebremst bzw. deaktiviert wird.

Das Trennen der Abschnitte 48 entlang des Sollrissbereichs 50 kann ohne Zuhilfenahme weiterer Hilfsmittel, insbesondere ohne den Einsatz einer Trenneinrichtung bzw. einer Messeranordnung erfolgen. Darüber hinaus oder auch alternativ kann durch die gezeigte Bremseinrichtung 84 zum Abschluss eines Umhüllungsvorgangs aber eine auf den Sollrissbereich 50 wirkende Kraft erhöht bzw. eine zusätzliche Kraft aufgebracht werden.

## Patentansprüche

1. Hüllmaterial (42) für eine Ballenpresse (10), insbesondere eine landwirtschaftliche Ballenpresse zur Bildung rundzylindrischer Ballen (12), zur Umhüllung von vorzugsweise wenigstens im Wesentlichen der Mantelfläche (43) eines Ballens (12), wobei das Hüllmaterial (42) der Ballenpresse (10) vorzugsweise in der Art einer Vorratsrolle (40) zugeführt wird, auf die das Hüllmaterial (42) aufgewickelt ist, **dadurch gekennzeichnet, dass** das Hüllmaterial (42) bezogen auf seine Längserstreckung in vorzugsweise im Wesentlichen selbsttätig trennbare Abschnitte (48) unterteilt ist.

2. Hüllmaterial nach Anspruch 1, **dadurch gekennzeichnet, dass** zwischen Abschnitten (48) wenigstens ein Sollrissbereich (50) vorgesehen ist, wobei der Sollrissbereich (50) vorzugsweise als wenigstens eine Perforationslinie (52) ausgebildet ist und/oder sich zumindest im Wesentlichen über die Breite (B) des Hüllmaterials (42) erstreckt.

3. Hüllmaterial nach Anspruch 1 oder 2, **dadurch gekennzeichnet, dass** die Länge der Abschnitte (48) den Umfang des zu umhüllenden Ballen (12) übersteigt und vorzugsweise etwa das 1,5 fache des Umfangs beträgt.

4. Hüllmaterial nach einem der vorherigen Ansprüche, **dadurch gekennzeichnet, dass** die Abschnitte (48) in einem bezogen auf eine Förderrichtung (F) nacheilenden Endbereich (71) eines Abschnitts (48) wenigstens einen Haftbereich (56) aufweisen, der vorzugsweise einem entsprechenden nächsten Sollrissbereich (50) voreilt.

5. Hüllmaterial nach Anspruch 4 **dadurch gekennzeichnet, dass** in dem Endbereich (71) ein mehrere, insbesondere drei Faltkanten (66, 68, 70) aufweisender Faltbereich (52) vorgesehen ist, der vorzugsweise in einem auf die Vorratsrolle (40) aufgewickelten Zustand des Hüllmaterial (42) zusammengefaltet ist und sich bei einem Abwickeln von der Vorratsrolle (40) entfalten kann, wobei der wenigstens eine Haftbereich (56) und/oder der Sollrissbereich (50) vorzugsweise zumindest wenn das Hüllmaterial (42) auf der Vorratsrolle (40) aufgewickelt ist zwischen in gefaltetem Zustand vorzugsweise innenliegenden Seitenbereichen (72, 74) des Faltbereichs (52) angeordnet ist,.

6. Hüllmaterial nach einem der Ansprüche 4 und 5, **dadurch gekennzeichnet, dass** der Haftbereich (56) wenigstens zwei vorzugsweise zumindest im Wesentlichen streifenförmige Haftkomponenten (58, 60) aufweist, die vorzugsweise jeweils mittels einer weiteren Haftkomponenten (62, 64) auf dem Hüllmaterial (42) gehalten werden, wobei die zweite Haftkomponente (60) insbesondere geeignet ist mit der ersten Haftkomponente (58) eine lösbare und mit dem Hüllmaterial (42) eine zumindest im Wesentlichen feste Haftverbindung einzugehen.

7. Hüllmaterial nach einem der Ansprüche 4 bis 6, **dadurch gekennzeichnet, dass** die erste und zweite Haftkomponente (58, 60) derart zusammenwirken können, dass sie zwei Seitenbereiche (72, 74) des Faltbereichs (52) geschlossen halten, zumindest wenn das Hüllmaterial (42) auf der Vorratsrolle (40) aufgewickelt ist.

8. Hüllmaterial nach einem der Ansprüche 4 bis 7, **dadurch gekennzeichnet, dass** der Sollrissbereich (50) wenigstens in einem gefalteten Zustand des Hüllmaterials (42) innerhalb der Seitenbereiche (72, 74) des Faltbereichs (52) angeordnet ist und/oder die erste und zweite Haftkomponente (58, 60) auf bezogen auf eine Längserstreckung des Hüllmaterials (42) unterschiedlichen Seiten des Sollrissbereichs (50) angeordnet sind.

9. Verfahren zur Umhüllung eines Ballen (12), vorzugsweise eines in einer Ballenpresse (10) gebildeten Rundballens, mit einem Hüllmaterial (42) nach einem der vorherigen Ansprüche, wobei der Ballen (12) nach Abschluss der Ballenbildung vorzugsweise mit einem Abschnitt (48) des Hüllmaterials (42) umhüllt wird, der sich nach erfolgter Umhüllung des Ballens (12) selbsttätig, insbesondere entlang eines Sollrissbereichs (50), von dem übrigen auf einer Vorratsrolle (50) aufgewickelten Hüllmaterial (42) abtrennt und im Anschluss insbesondere ein Endbereich (71) des Abschnitts (48) an bereits auf dem Ballen (12) befindlichen Hüllmaterial (42) anhaftet.

10. Verfahren nach Anspruch 9, **dadurch gekennzeichnet, dass** sich ein Faltbereich (54) des Hüllmaterials (42) nach einem vorzugsweise zumindest annähernd vollständigen Umwickeln des Ballen (12) mit dem Abschnitt (48) selbsttätig entfaltet, wobei der Faltbereich (54) vorzugsweise den Haftbereich (56) freigibt, vorzugsweise derart, dass sich eine erste von einer zweiten Haftkomponente (58, 60) löst und die erste Haftkomponente (58) nach einem Abtrennen des Abschnitts (48) von dem übrigen Hüllmaterial (42) mit den Ballen (12) umhüllenden Hüllmaterial (42) eine zumindest im Wesentlichen feste Haftverbindung eingeht.
